# DEMANDE DE BREVET EUROPEEN

(11) **EP 1 174 603 A1**
(43) Date de publication de la demande: **23.01.2002**
(21) Numéro de dépôt: 01401885.7
(22) Date de dépôt: 13.07.2001
(51) Int. Cl.: F01P 7/16, G05D 23/13

(54) **Dispositif thermostatique piloté à commande proportionnelle, à élément thermostatique de sécurité**

(30) Priorité: 17.07.2000 FR 0009336
(71) Demandeur: VERNET S.A., 91291 Arpajon Cédex (FR)
(72) Inventeur: Chamot, Jean-Pierre, 91290 Arpajon (FR); Le Clanche, Gérard Jean André, 91210 Draveil (FR); Mabboux, Lionel Jean, 91700 Ste Genevieve des Bois (FR); Mas, René Jean-Claude, 91220 Bretigny sur Orge (FR); Jure, Eddy, 72560 Change (FR)
(74) Mandataire: Blot, Philippe Robert Emile

(57) **Abrégé**

L'invention concerne un dispositif du type vanne comprenant un boîtier comportant un accès (7) de fluide dont l'obturation par un obturateur (9) solidarisé à un actionneur (10) est fonction de la température du fluide parcourant le dispositif.

Afin d'augmenter sa sécurité de fonctionnement et réduire son coût, le dispositif comporte un élément thermostatique (22) de sécurité à matériau dilatable situé dans le courant de fluide parcourant le boîtier, pour actionner l'obturateur (9) lorsque, par suite d'une défaillance de l'actionneur (10) ou de son appareillage de commande, l'obturateur n'a pas été déplacé par l'actionneur, lequel est constitué également par un élément thermostatique à matériau dilatable, renfermant des moyens de chauffage (13) reliés à son appareillage de commande.

Utilisation : circuits de refroidissement des moteurs de véhicules.

## Description

L'invention concerne un dispositif thermostatique du type vanne à actionneur à commande proportionnelle, comportant un élément thermostatique pouvant être un élément thermostatique conventionnel à cire dilatable pour lui assurer en outre un mode de fonctionnement de sécurité en cas de défaillance de l'actionneur ou de son appareillage de commande.

Les dispositifs thermostatiques du type vanne sont utilisés notamment dans les circuits de refroidissement des moteurs à combustion interne en vue de régler la température du liquide de refroidissement (généralement un mélange aqueux appelé « eau de refroidissement ») introduit dans le moteur pour en optimiser le fonctionnement en agissant sur un débit de liquide dit « chaud» provenant du moteur du véhicule et/ou un débit de liquide dit « froid» provenant d'un radiateur de refroidissement, que l'on mélange pour constituer un liquide de refroidissement dit « tiède » que l'on réintroduit dans le moteur.

On notera que les mots « chaud », « froid » et « tiède» sont utilisés dans un but de simplification du vocabulaire pour indiquer les niveaux relatifs des températures des trois courants de liquide lors du fonctionnement du dispositif en régime établi, mais qu'en fait les températures respectives de ces trois courants peuvent être très proches, et même identiques quand le dispositif thermostatique est encore fermé.

On connaît déjà, notamment par le brevet français publié sous le numéro 2 703 730, des dispositifs thermostatiques motorisés au moyen d'un moteur électrique comportant un élément thermostatique de sécurité, permettant par exemple de mélanger dans une chambre du dispositif un courant de liquide froid au courant de liquide chaud même lorsque le moteur ou son appareillage de commande sont défaillants, si la température du liquide dans lequel baigne l'élément thermostatique dépasse une valeur souhaitée.

Le dispositif thermostatique de ce document 2 703 730 est motorisé au moyen d'un moteur électrique comportant un arbre de sortie rotatif actionnant, au moyen d'un accouplement à système vis-écrou conventionnel transformant le mouvement rotatif de l'arbre en mouvement de translation, l'obturateur mobile du dispositif thermostatique, à savoir un tiroir ou « boisseau », dégageant progressivement un accès d'entrée de liquide froid de ce dispositif en même temps qu'il obture progressivement un accès d'entrée de liquide chaud, et inversement ; l'élément thermostatique de sécurité est aligné avec la vis du système vis-écrou et lorsque sa température s'élève, son piston exerce sur le boisseau, si celui-ci n'a pas été déplacé ou a été insuffisamment déplacé par le système vis-écrou, une force orientée dans le sens du dégagement de l'accès d'entrée de liquide froid et de l'obturation de l'accès d'entrée de liquide chaud ; afin que, sous la poussée du piston de l'élément thermostatique, le boisseau puisse effectivement se déplacer dans ce sens, l'accouplement à système vis-écrou est télescopique, et plus précisément, monté coulissant sur l'arbre du moteur en étant sollicité par un ressort vers le boisseau dans le sens du dégagement de l'accès d'entrée de liquide chaud et de l'obturation de l'accès d'entrée de liquide froid ; ainsi, quand l'élément thermostatique exerce sur le boisseau un effort en sens inverse supérieur à celui du ressort, pour obturer l'accès d'entrée de liquide chaud et dégager l'accès d'entrée de liquide froid, le ressort est comprimé par la rétraction du système vis-écrou et ainsi rien ne s'oppose à cette obturation et ce dégagement respectifs.

Outre le fait que ce dispositif est du type vanne à boisseau, configuration qu'il est parfois difficile d'adapter à certaines structures de moteur et de circuit de refroidissement, un inconvénient de ce dispositif consiste en ce que lorsque la température du liquide dans lequel baigne l'élément thermostatique diminue, le système vis-écrou suit le mouvement de rétraction de l'élément thermostatique, ce qui mène, puisque le moteur électrique ou son appareillage de commande est défaillant, à une nouvelle remontée de température, une nouvelle élongation de l'élément thermostatique, et un fonctionnement qui a tendance à l'instabilité avec un liquide « tiède» à une température notablement plus élevée que la température désirée. De plus, l'élément thermostatique doit être relativement puissant pour vaincre l'effort résistant du ressort, et le système vis-écrou avec son montage télescopique à ressort est relativement volumineux ce qui ne permet pas de réduire autant qu'il serait souhaitable les dimensions du dispositif thermostatique.

L'invention a pour but de remédier à ces inconvénients et concerne à cette fin un dispositif thermostatique comprenant un boîtier comportant des accès de fluide, au moins un accès de fluide étant obturable par un obturateur, un actionneur de dosage fixé au boîtier et muni d'une tige de sortie mobile en translation reliée mécaniquement à l'obturateur pour actionner cet obturateur en translation sélectivement dans un sens où il obture progressivement l'accès obturable et dans un sens où il le dégage progressivement en fonction d'au moins un paramètre de fonctionnement du moteur détecté par au moins un capteur, et un élément thermostatique de sécurité situé au moins partiellement dans le courant de fluide et comportant une partie adaptée pour actionner en translation l'obturateur lorsque par suite d'une défaillance celui-ci n'a pas été actionné par l'actionneur de dosage et la température dudit courant de fluide dépasse d'une valeur prédéterminée celle qui aurait dû provoquer un tel actionnement par cet actionneur, caractérisé en ce que l'actionneur de dosage est un actionneur à commande proportionnelle constitué par un élément thermostatique à matériau dilatable renfermant en outre des moyens de chauffage associés à des moyens de liaison des moyens de chauffage à un appareillage de commande à calculateur relié audit capteur, par lequel l'actionneur de dosage est piloté par l'intermédiaire des moyens de liaison.

Grâce au fait que l'actionneur à commande proportionnelle de dosage est un élément thermostatique adapté pour être chauffé sur commande d'un calculateur, et non un moteur électrique tel qu'un moteur pas-à-pas, le prix de revient du dispositif thermostatique est notablement abaissé ;

En outre, si l'on compare ce dispositif à deux éléments thermostatiques aux dispositifs à deux éléments thermostatiques antérieurs qui comportent un élément thermostatique de dosage dont le matériau dilatable est chauffé uniquement par le fluide parcourant le boîtier et comportant en outre un élément thermostatique de réglage de seuil de régulation pouvant être chauffé ou non sur commande d'un calculateur, on met clairement en évidence le fait que le dispositif selon l'invention permet d'obtenir une température de fonctionnement du moteur du véhicule toujours optimale du double point de vue de la consommation de carburant et de l'émission des polluants quelle que soit la charge de ce moteur.

Le dispositif thermostatique peut en outre présenter une ou plusieurs des caractéristiques suivantes :
- les moyens de chauffage comprennent un composant électrique résistif, et les moyens de liaison sont des conducteurs électriques adaptés pour relier le composant résistif à l'appareillage de commande, comprenant un calculateur de bord du véhicule ;
- l'élément thermostatique de sécurité est réglé pour actionner l'obturateur dans le sens de l'ouverture pour une température du fluide supérieure de quelques degrés à la température à laquelle l'actionneur de dosage est réglé pour actionner l'obturateur dans ce sens ;
- l'élément thermostatique de dosage est disposé dans le boîtier en aval de l'accès obturable par un obturateur ;
- l'élément thermostatique de dosage est porté par un support s'étendant dans une conduite appartenant au boîtier ;
- l'élément thermostatique de dosage et l'élément thermostatique de sécurité sont disposés de part et d'autre de l'accès obturable, l'élément thermostatique de dosage comporte une tige de sortie mobile en translation en saillie vers l'obturateur, l'élément thermostatique de sécurité comporte un piston également en saillie vers l'obturateur et en vis-à-vis de la tige de sortie, et le piston est fixé à la tige de sortie ;
- l'élément thermostatique de sécurité comporte une collerette logée au moins partiellement dans une jupe de l'obturateur ;
- le dispositif comporte un ressort de rappel en appui contre l'obturateur pour exercer sur lui un effort tendant à le rappeler dans le sens de la fermeture ; et
- la tige de sortie et le piston sont solidarisés avec interposition d'une rondelle de butée adaptée pour pouvoir prendre appui sélectivement en fin de course contre l'extrémité libre d'une bague de l'élément de dosage et contre l'extrémité libre d'une bague de l'élément de sécurité.

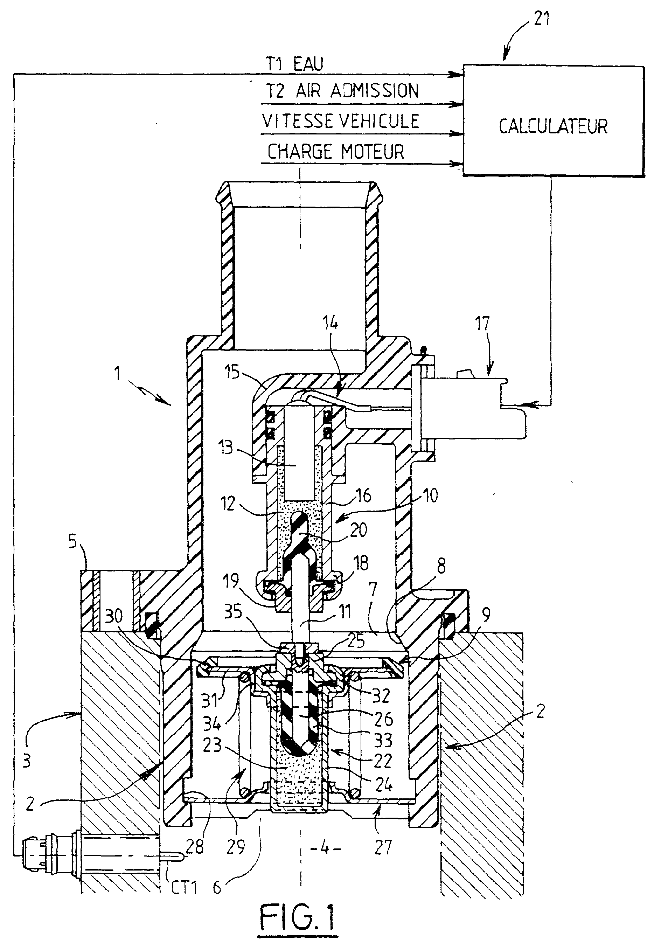

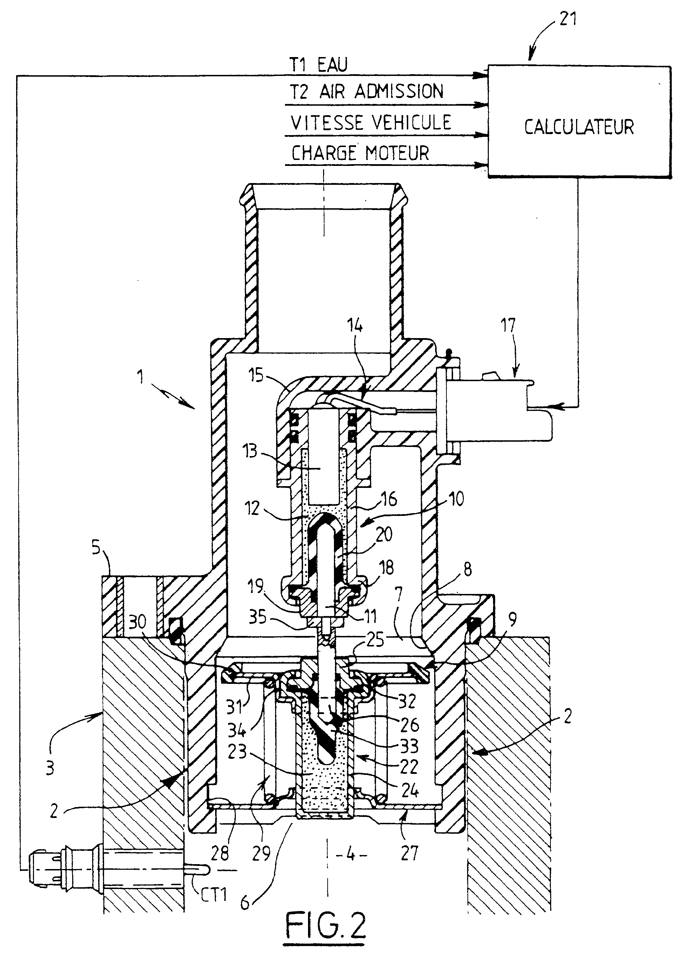

D'autres caractéristiques et avantages de l'invention ressortiront de la description qui va suivre, d'une forme de réalisation de l'invention donnée à titre d'exemple non limitatif, illustrée par les dessins joints dans lesquels les figures 1 et 2 montrent schématiquement en coupe un dispositif thermostatique selon l'invention, respectivement dans un état dans lequel l'obturateur mobile du dispositif est soumis à l'action de l'actionneur de dosage en l'absence de défaillance de celui-ci ou/et de son appareillage de commande, et dans un état dans lequel l'actionneur ou/et son appareillage de commande étant défaillants, l'élément thermostatique de sécurité a pris le relais pour actionner l'obturateur mobile.

Sur les figures, afin de ne pas surcharger le dessin, un certain nombre de composants et de traits relatifs à des composants qui sont en arrière des plans de coupe n'ont pas été représentés, mais la compréhension de l'agencement du dispositif selon l'invention sera facilitée par la description qui va suivre.

Le dispositif thermostatique représenté comporte de manière connue divers organes logés dans un boîtier généralement en matériau synthétique formé par une conduite ou pipe 1 ici rectiligne mais pouvant être coudée portant des doigts 2 logés dans un corps 3 constitué par une région d'un moteur de véhicule entourant un passage 4 de transit pour le liquide de refroidissement du moteur creusé dans cette région et dans lequel aboutissent un ou plusieurs canaux de circulation de fluide tel qu'un liquide de refroidissement. La conduite 1 est munie extérieurement d'une bride de fixation 5 par laquelle elle est fixée au corps par exemple par vis ; la région de son extrémité libre opposée à sa région d'extrémité qui porte les doigts 2 est adaptée pour que lui soit raccordée une autre conduite telle qu'une durite.

Ici, la conduite 1 et le passage 4 présentent une forme générale de révolution à section droite approximativement circulaire et s'étendent en alignement le long d'un même axe longitudinal central, dans une première direction.

La région du boîtier s'étendant dans le passage 4 comporte au moins un premier accès 6 d'entrée de fluide provenant du moteur, et un deuxième accès 7 de sortie de fluide pour transmettre en aval une partie du fluide destinée à être remise en circulation, généralement au moyen d'une pompe de circulation.

Le premier accès 6 d'entrée de fluide s'étend au niveau de l'extrémité libre des doigts 2, et le deuxième accès 7 de sortie de fluide est délimité par la région d'extrémité de la conduite 1 à laquelle sont raccordés les doigts ; au niveau de ce deuxième accès 7, la surface intérieure de la conduite 1 présente une forme tronconique évasée en direction du premier accès pour constituer un siège 8 pour un obturateur constitué ici par un clapet 9 de dosage du fluide autorisé à s'écouler du passage 4 à la conduite 1.

La région du boîtier s'étendant entre le premier accès 6 et le siège 8 sera appelée dans la suite « région amont » du boîtier, tandis que la région s'étendant au-delà du siège 8 dans la conduite 1 vers l'extrémité libre de celle-ci sera appelée « région aval » du boîtier.

Pour actionner le clapet 9 en translation sélectivement dans un sens où il obture progressivement l'accès de sortie 7 de fluide et dans un sens où il le dégage progressivement en fonction notamment de la température du courant de fluide de refroidissement parcourant le dispositif thermostatique détectée par un capteur CT1 plongé dans ce courant approximativement au niveau du premier accès 6, le dispositif comporte un actionneur 10 de dosage fixé au boîtier et muni d'une tige 11 de sortie reliée mécaniquement au clapet 9.

Plus précisément, l'actionneur 10 de dosage est un moteur linéaire constitué par un élément thermostatique renfermant un matériau dilatable 12 tel qu'une cire dilatable et en outre des moyens de chauffage de ce matériau, par exemple un composant électrique résistif 13, associés à des moyens de liaison 14 pour relier ces moyens de chauffage à un appareillage de commande adapté pour faire fonctionner l'élément thermostatique en moteur linéaire à commande proportionnelle ; plus précisément, ici, la puissance électrique fournie à l'élément thermostatique 10, donc la course de la tige 11, est proportionnelle à l'écart entre la température du fluide mesurée et une température de consigne fixée par programmation ; la commande peut être également intégrale (action proportionnelle à la « surface » de l'écart) et/ou dérivée (compensation partielle des temps morts) ; on peut également envisager l'utilisation d'une « logique floue ».

Le composant électrique résistif 13 peut être une résistance électrique simple, ou une résistance enroulée en hélice connue commercialement sous le nom THERMOCOAX, ou une résistance sérigraphiée sur une plaquette isolante, ou encore un barreau résistant, ou une thermistance connue dans la technique sous le nom C.T.P ; les moyens de liaison 14 sont alors des conducteurs électriques connectés au composant résistif 13.

L'élément thermostatique constituant l'actionneur 10 de dosage est porté par un support tubulaire coudé 15 en une seule pièce avec le boîtier et s'étendant à l'intérieur de celui-ci dans sa région aval. Le support tubulaire 15 débouche à l'extérieur de la conduite 1 par un orifice percé dans la paroi latérale de celle-ci, et à l'intérieur de la conduite par un orifice circulaire centré sur l'axe longitudinal central commun à la conduite 1 et au passage 4 et s'ouvrant en direction du siège 8. Le support 15 comporte ainsi un premier tronçon s'étendant dans la première direction définie plus haut comme étant celle de l'axe longitudinal précité, dans lequel est fixée l'enveloppe 16 de l'élément thermostatique, et un deuxième tronçon s'étendant dans une deuxième direction perpendiculaire à la première direction dans le cas présent où la conduite 1 n'est pas coudée dans lequel est fixé ici un passe-fils 17 pour le passage des conducteurs électriques constituant les moyens de liaison 14 ; en variante, le deuxième tronçon peut servir à la fixation d'un connecteur électrique auquel sont raccordés les conducteurs 14.

Le composant résistif 13 est fixé à l'une de ses extrémités dans une région d'extrémité de l'enveloppe 16 insérée dans le premier tronçon du support 15, et la plus grande partie de sa longueur s'étend dans la masse de matériau dilatable 12 ; la région d'extrémité opposée de l'enveloppe 16 dont la plus grande partie de la longueur s'étend dans la conduite 1 hors du support 15, comporte une collerette 18 dans laquelle est sertie une bague 19 formant support de guidage pour la tige de sortie 11 qui la traverse de manière coulissante et à laquelle est fixé un capuchon tubulaire déformable 20 logé dans la masse de matériau dilatable contenue dans l'enveloppe 16, capuchon dans lequel est insérée la région de la tige de sortie 11 s'étendant à l'intérieur de l'enveloppe ; c'est en revanche la région de la tige de sortie 11 qui est en saillie hors de l'enveloppe 16 et de la bague 19 en direction du clapet 9 qui est reliée mécaniquement à celui-ci pour l'actionner en translation.

Le fonctionnement de l'élément thermostatique 10 est commandé par un appareillage comprenant un calculateur 21 pouvant être le calculateur de bord du véhicule ou un calculateur séparé, recevant une information de température T1 du fluide de refroidissement qui lui est transmise par le capteur CT1 plongé dans le courant de fluide comme cela a déjà été mentionné, en amont du siège 8 pour le clapet, et éventuellement également une information de température T2 d'air au niveau de l'admission du moteur, ou/et une information de vitesse du véhicule, ou/et une information de charge du moteur, ou/et une information de température extérieure qui lui sont transmises par des capteurs appropriés. En vue d'asservir ou au moins de piloter l'élément thermostatique 10 par l'appareillage de commande à calculateur, le calculateur 21 est relié à l'élément 10 directement par les conducteurs de liaison 14 ou par l'intermédiaire de l'éventuel connecteur fixé dans le support 15.

Le dispositif thermostatique selon l'invention comporte en outre un élément thermostatique de sécurité 22 renfermant également un matériau dilatable 23 tel qu'une cire dilatable, mais dénué de moyens de chauffage internes et dont l'enveloppe 24 est plongée dans le fluide de refroidissement transitant dans la région amont du boîtier ; cet élément de sécurité 22 est disposé dans l'alignement de l'élément de dosage 10, c'est-à-dire qu'il est centré comme lui sur l'axe longitudinal central de la conduite 1 et du passage 4, mais en opposition avec l'élément de dosage, le fond, fermé, de son enveloppe 24, étant approximativement au droit de l'extrémité libre des doigts 2, et sa bague 25 formant support de guidage pour un piston 26 étant approximativement au niveau du clapet 9.

Plus précisément, la région d'extrémité de l'enveloppe 24 proche du fond de celle-ci est centrée entre les doigts 2 par le fait qu'elle est montée coulissante dans un trou de la partie centrale d'un pontet 27 porté par les doigts 2 et s'étendant dans la région amont du boîtier ; à cette fin, le pontet 27 comporte des branches en saillie radialement en direction des doigts 2, branches dont les extrémités libres sont logées dans des encoches respectives 28 des doigts proches de l'extrémité libre de ceux-ci et sont en butée contre des surfaces de fond de ces encoches, s'étendant perpendiculairement à l'axe longitudinal du boîtier, sous l'action d'un ressort hélicoïdal 29 ; ce ressort, entourant l'élément de sécurité 22, est en appui à l'une de ses extrémités contre les branches du pontet, et à l'extrémité opposée contre le clapet 9.

Le clapet 9 comporte une couronne de portée 30 en matériau synthétique présentant en vis-à-vis du siège 8 une surface approximativement tronconique de diamètre croissant en direction de l'accès 6 d'entrée de fluide, adaptée pour venir reposer contre le siège 8 quand le clapet est en position de fermeture, et une armature métallique 31 en forme de coupelle à pourtour circulaire dont la région du pourtour est insérée dans la surface interne de la couronne de portée 30. Les régions centrales du pontet 27 et de l'armature métallique 31 entourant l'enveloppe 24 de l'élément de sécurité 22 comportent en vis-à-vis des jupes approximativement cylindriques respectives de centrage du ressort hélicoïdal 29 autour de l'enveloppe.

A son extrémité opposée à son fond proche de l'extrémité libre des doigts 2, l'enveloppe 24 comporte une collerette 32 dans laquelle est sertie la bague 25 que traverse la tige du piston 26 montée coulissante dans la bague à laquelle est en outre fixé un capuchon tubulaire déformable 33 logé dans la masse de matériau dilatable contenue dans l'enveloppe 22, capuchon dans lequel est insérée la région de la tige du piston 26 s'étendant à l'intérieur de l'enveloppe. La collerette 32 est logée au moins partiellement dans la jupe 34 de l'armature métallique 31, et la surface de son épaulement de raccordement à la partie cylindrique de l'enveloppe renfermant le matériau dilatable, qui s'étend dans un plan perpendiculaire à l'axe longitudinal du boîtier, est en appui contre le fond de la jupe de l'armature métallique 31.

La liaison mécanique de l'élément de dosage 10 et de l'élément de sécurité 22 avec le clapet 9, permettant en fonctionnement normal l'actionnement proportionnel du clapet par l'élément de dosage sous la commande de l'appareillage à calculateur, et en cas de défaillance de l'élément de dosage 10 ou/et de son appareillage de commande, l'actionnement du clapet par l'élément de sécurité, va maintenant être décrite.

Cette liaison est extrêmement simple, puisqu'il suffit de fixer l'un à l'autre la tige 11 de sortie de l'élément de dosage et le piston 26 de l'élément de sécurité, avec interposition d'une rondelle de butée 35 en saillie annulairement par rapport à la tige 11 et au piston 26 destinée à prendre appui en fin de course sélectivement contre l'extrémité libre de la bague 19 de l'élément de dosage et contre l'extrémité libre de la bague 25 de l'élément de sécurité. Par exemple, la tige 11 présente à son extrémité libre un doigt fileté et le piston 26 présente à son extrémité libre un trou taraudé dans lequel est vissé ce doigt fileté autour duquel est enfilée la rondelle de butée 35.

Ainsi, le débit du liquide de refroidissement peut être réglé en fonction de la température du circuit d'eau, de la température d'admission d'air, de la vitesse du véhicule, de la charge du moteur, et de la température extérieure, en écartant à volonté le clapet 9 du siège 8. Le débit et la température du circuit d'eau peuvent être calculés à la valeur optimale pour obtenir un gain de consommation maximal et une pollution minimale pour chaque phase de fonctionnement du moteur quelle que soit la charge de celui-ci. Plus particulièrement, le dispositif thermostatique selon l'invention et son appareillage de commande peuvent être réglés pour qu'à un rapport de boîte de vitesses donné, la tension d'alimentation de l'élément de dosage 10 suive les variations de la vitesse du véhicule et maintienne en sortie de moteur une température approximativement constante du fluide de refroidissement dans une fourchette par exemple de 4°C. Quand le capteur de température du fluide de refroidissement détecte un dépassement de la température optimale supérieur à une valeur prédéterminée, ce qui laisse supposer une défaillance de l'élément de dosage 10 ou de son appareillage de commande, l'élément de sécurité 22 placé en amont du clapet 9 déplace celui-ci jusqu'à une distance elle-même prédéterminée en fonction d'un algorithme du calculateur prenant en compte les informations délivrées par les autres capteurs. La valeur du seuil d'intervention de l'élément de sécurité 22 peut être choisie par exemple dans une gamme de 2°C à 5°C en plus de la température idéale de régulation aux hautes températures. On peut par exemple, dans le cas d'une température idéale de 100°C à 102°C, choisir une température de début d'ouverture par l'élément de sécurité de 104°C, et une ouverture maximale pour une température de 110°C.

Un appareil d'alarme peut être relié au calculateur pour indiquer au conducteur du véhicule si il devient impossible de réguler à la température idéale, cas dans lequel le véhicule doit être ramené à un atelier de vérification et de réglage et éventuellement de réparation du circuit de refroidissement.

Grâce au fait que l'élément de dosage 10 est en aval du clapet 9, le temps de réaction à l'ouverture du clapet lors de sa première ouverture en fonctionnement est raccourci.

Grâce au fait que cet élément est un élément thermostatique chauffé sous la commande d'un calculateur, on obtient un fonctionnement similaire à celui d'un dispositif thermostatique à moteur pas-à-pas avec vis réversible, donc un montage notablement moins complexe et pour un coût notablement réduit.

Bien entendu, l'invention n'est pas limitée à la forme de réalisation ci-dessus décrite et représentée, et on pourra en prévoir d'autres sans sortir de son cadre.

## Revendications

1. Dispositif thermostatique comprenant un boîtier comportant des accès (6, 7) de fluide, au moins un accès (7) de fluide étant obturable par un obturateur (9), un actionneur de dosage (10) fixé au boîtier et muni d'une tige de sortie (11) mobile en translation reliée mécaniquement à l'obturateur pour actionner cet obturateur en translation sélectivement dans un sens où il obture progressivement l'accès obturable (7) et dans un sens où il le dégage progressivement en fonction d'au moins un paramètre de fonctionnement du moteur détecté par au moins un capteur (CT1), et un élément thermostatique de sécurité (22) situé au moins partiellement dans le courant de fluide et comportant une partie (32) adaptée pour actionner en translation l'obturateur lorsque par suite d'une défaillance celui-ci n'a pas été actionné par l'actionneur de dosage et la température dudit courant de fluide dépasse d'une valeur prédéterminée celle qui aurait dû provoquer un tel actionnement par cet actionneur, **caractérisé en ce que** l'actionneur de dosage (10) est un actionneur à commande proportionnelle constitué par un élément thermostatique à matériau dilatable renfermant en outre des moyens de chauffage (13) associés à des moyens de liaison (14) des moyens de chauffage à un appareillage de commande à calculateur (21) relié audit capteur (CT1), par lequel l'actionneur de dosage est piloté par l'intermédiaire des moyens de liaison.

2. Dispositif thermostatique selon la revendication 1, pour un véhicule équipé d'un calculateur de bord, **caractérisé en ce que** les moyens de chauffage (13) comprennent un composant électrique résistif, et les moyens de liaison (14) sont des conducteurs électriques adaptés pour relier le composant résistif à l'appareillage de commande, comprenant ledit calculateur de bord du véhicule.

3. Dispositif thermostatique selon l'une quelconque des revendications 1 et 2, **caractérisé en ce que** l'élément thermostatique de sécurité (22) est réglé pour actionner l'obturateur (9) dans le sens de l'ouverture pour une température du fluide supérieure de quelques degrés à la température à laquelle l'actionneur de dosage (10) est réglé pour actionner l'obturateur dans ce sens.

4. Dispositif thermostatique selon l'une quelconque des revendications 1 à 3, **caractérisé en ce que** l'élément thermostatique de dosage (10) est disposé dans le boîtier en aval de l'accès (7) obturable par un obturateur (9).

5. Dispositif thermostatique selon l'une quelconque des revendications 1 à 4, **caractérisé en ce que** l'élément thermostatique de dosage (10) est porté par un support (15) s'étendant dans une conduite (1) appartenant au boîtier.

6. Dispositif thermostatique selon l'une quelconque des revendications 1 à 5, **caractérisé en ce que** l'élément thermostatique de dosage (10) et l'élément thermostatique de sécurité (22) sont disposés de part et d'autre de l'accès obturable (7), l'élément thermostatique de dosage (10) comporte une tige de sortie (11) mobile en translation en saillie vers l'obturateur (9), l'élément thermostatique de sécurité (22) comporte un piston (26) également en saillie vers l'obturateur et en vis-à-vis de la tige de sortie (11), et le piston (26) est fixé à la tige de sortie (11).

7. Dispositif thermostatique selon la revendication 6, **caractérisé en ce que** l'élément thermostatique de sécurité (22) comporte une collerette (32) logée au moins partiellement dans une jupe (34) de l'obturateur (9).

8. Dispositif thermostatique selon l'une quelconque des revendications 6 et 7, **caractérisé en ce qu'**il comporte un ressort de rappel (29) en appui contre l'obturateur (9) pour exercer sur lui un effort tendant à le rappeler dans le sens de la fermeture.

9. Dispositif thermostatique selon l'une quelconque des revendications 6 à 8, **caractérisé en ce que** la tige de sortie (11) et le piston (26) sont solidarisés avec interposition d'une rondelle de butée (35) adaptée pour pouvoir prendre appui sélectivement en fin de course contre l'extrémité libre d'une bague (19) de l'élément de dosage (10) et contre l'extrémité libre d'une bague (25) de l'élément de sécurité (22).
